# EUROPÄISCHE PATENTSCHRIFT

(11) **EP 1 245 537 B1**
(45) Veröffentlichungstag und Bekanntmachung des Hinweises auf die Patenterteilung: **19.07.2006**
(21) Anmeldenummer: 02006819.3
(22) Anmeldetag: 25.03.2002
(51) Int. Cl.: C02F 3/00, C02F 3/04, C02F 3/02, C02F 3/32

(54) **Pflanzenkläranlage**
Sewage plant with plants bed
Station d'épuration d' eau polluée avec une couche à plantes

(30) Priorität: 28.03.2001 DE 10115515
(43) Veröffentlichungstag der Anmeldung: 02.10.2002
(73) Patentinhaber: Bednarsch, Marcus, 98527 Suhl (DE)
(72) Erfinder: Bednarsch, Marcus, 98527 Suhl (DE)
(74) Vertreter: Engel, Christoph Klaus

(56) Entgegenhaltungen:
- DE-A- 4 115 965
- DE-A- 10 010 109
- DE-A- 19 737 690
- DE-U- 20 005 108
- US-A- 5 702 593

## Beschreibung

Die vorliegende Erfindung betrifft eine Pflanzenkläranlage mit einem Zulauf, einem Ablauf und einem Pflanzenbeet, welches von dem zu klärenden Abwasser durchströmt wird.

Zur dezentralen Abwasserbehandlung werden in jüngerer Zeit sogenannte Pflanzenkläranlagen eingesetzt, bei denen das Abwasser einen mit speziellen Sumpfpflanzen bepflanzten Bodenkörper durchfließt, wobei vor allem chemisch-physikalische und biologische Reinigungsvorgänge ablaufen. Die Abwasserbehandlung erfolgt durch ein Zusammenwirken der speziell ausgewählten Bodenschichten, der Sumpfpflanzen, von Mikroorganismen und der in den Bodenschichten vorhandenen Porenluft. Der Bodenkörper ist dabei aus mehreren Bodenschichten aufgebaut, die sich hinsichtlich Material und Körnung voneinander unterscheiden. Die besten Reinigungsergebnisse werden erzielt, wenn der Bodenkörper aus sandigkiesigem Material besteht, teilweise mit geringen bindigen Anteilen. Einzelheiten für die Bemessung, den Bau und den Betrieb von Pflanzenkläranlagen können dem Arbeitsblatt ATV - A262, Juli 1998, ISBN 3-927729-42-6 entnommen werden.

Aus der Deutschen Gebrauchsmusterschrift DE 299 19 732 U1 ist eine Pflanzenkläranlage mit modularem Aufbau bekannt. Das dort gezeigte Modul zeichnet sich dadurch aus, dass es einen vertikal durchströmten bewachsenen Bodenfilter in einem formstabilen Behälter enthält. Dieser Behälter besitzt ein anschlussfertiges integriertes Rinnen- oder Drainagesystem am Behälterboden und ein Verteilersystem an der Oberfläche des Bodenfilters damit soll gewährleistet werden, dass eine gleichmäßige vertikale Durchströmung im gesamten Bodenfilter erzielt wird. Für den Aufbau einer Pflanzenkläranlage müssen in der Regel mehrere solche Module zusammen geschaltet werden. Die Fertigstellung der Pflanzenkläranlage erfolgt beim Einbau im jeweiligen Bodenabschnitt, wobei die einzelnen Module korrekt zusammengeschaltet werden müssen. Außerdem ist es erforderlich, Aggregateinheiten, wie Zulauf- und Ablaufpumpen sowie die zugehörigen Steuerelemente anzubringen und funktionsfähig mit den Modulen zu verbinden. Für den Aufbau der bekannten Pflanzenkläranlage ist es daher erforderlich, dass ein Fachmann vor Ort tätig wird, der die Einzelheiten einer Pflanzenkläranlage gut kennt, um die volle Funktionsfähigkeit der Anlage herzustellen.

Die deutsche Gebrauchsmusterschrift DE 297 04 850 U1 beschreibt einen ortsbeweglichen, bepflanzten Festbettreaktor zur naturnahen Reinigung von schadstoffhaltigem Wasser. Dafür wird in einem Schüttgutcontainer ein vollständiges Pflanzenbeet eingebaut, wobei der Container mit entsprechenden Zu- und Ablaufarmaturen bestückt wird. Dieser ortsbewegliche Festbettreaktor dient dem zeitweisen Gebrauch und eignet sich nicht für einen dauerhaften Betrieb im eingebauten Zustand. Da der Festbettreaktor beweglich bleiben soll, müssen die Bodenschichten möglichst klein gehalten werden, um die Masse des gesamten Reaktors zu minimieren. Der ortbewegliche Festbettreaktor besitzt keine integrierten Steuereinheiten, mit denen ein optimaler Betrieb des Pflanzenbeetes über einen längeren Zeitraum gesteuert werden könnte. Der wesentliche Nachteil besteht jedoch in dem hohen Gewicht des Festbettreaktors, welches die Transportkosten unzumutbar erhöht.

Die DE 41 15 965 A1 beschreibt eine transportable pflanzenbiologische Kleinkläranlage, die ortsungebunden und mit kontinuierlichem Durchsatz über das ganze Jahr hinweg arbeitet. In einem Gewächshauscontainer sind mindestens zwei Pflanzenklärbecken hintereinander und mindestens zwei Reihen von Pflanzenklärbecken nebeneinander positioniert, die jeweils einzeln ausgetauscht werden können. Dabei handelt es sich um vollständig bepflanzte Klärbecken. Aus Gewichtsgründen muss von vornherein auf die Integration großvolumiger Wasserbehälter verzichtet werden. Außer den Pflanzenbeetabschnitten befinden sich nur einige zugeordnete Komponenten im Container.

Die DE 198 38 692 A1 zeigt eine Pflanzenbeetkläranlage für den stationären Einsatz. Diese Pflanzenbeetkläranlage besitzt im Zulaufabschnitt eine Mehrkammergrube, die über einen Verteilerschacht Abwasser in die eigentliche Pflanzenklärstufe einleitet. An die Pflanzklärstufe schließt sich auf der Abflussseite ein separater Kontrollschacht an. Diese Pflanzenbeetkläranlage besteht somit aus mindestens vier Volumenkörpern, die separat im Boden eingebracht und während des Einbaus in korrekter Weise miteinander verbunden werden müssen.

Die Aufgabe der vorliegenden Erfindung besteht somit darin, eine Pflanzenkläranlage bereitzustellen, die sich für den stationären Einsatz eignet.

Der Einbau der ganzen Kläranlage am Einsatzort soll auf möglichst wenige einfache Arbeitsschritte reduziert werden, wobei insbesondere mögliche Einbau- und Inbetriebnahmefehler durch eine weitgehende Vorkonfektionierung ausgeschlossen werden sollen.

Diese und weitere Aufgaben werden durch die im Anspruch 1 definierte stationäre Pflanzenkläranlage gelöst.

Dadurch wird es erstmals ermöglicht, eine Pflanzenkläranlage mit den genannten Merkmalen industriell weitgehend vollständig herzustellen, so dass abgesehen von dem Anschluss des Zulaufs und des Ablaufs sowie des Einfüllens der Bodenschichten keine weiteren Installationsarbeiten erforderlich sind, wenn die Pflanzenkläranlage vor Ort eingebaut wird. Sämtliche technischen Komponenten sind in einem gemeinsamen Kläranlagengehäuse herstellerseitig integriert, wodurch fehlerhafte Installationen ausgeschlossen sind. Die Pflanzenkläranlage kann somit auch von nicht speziell qualifizierten Personen oder im Wege des Eigenbaus durch den Nutzer eingebaut werden.

Eine besonders leicht handhabbare Ausführungsform der Pflanzenkläranlage zeichnet sich dadurch aus, dass das Kläranlagengehäuse vollständig fertig konfektioniert ist. Dies bedeutet, dass ein abgeschlossener Pflanzenbeetschacht in dem Kläranlagengehäuse integriert ist, in den beim Einbau die einzelnen Schichten des Pflanzenbeetes eingebracht werden. Der Einbau ist damit besonders einfach und sicher möglich. Insbesondere besteht durch das vollständig gefertigte und formfeste Gehäuse nicht die Gefahr, dass Klärflüssigkeit in das umgebende Erdreich eindringt.

Gemäß einer abgewandelte Ausführungsform umfasst das vorkonfektionierte Kläranlagengehäuse eine Bodenplatte, auf welcher zumindest der Zulaufschacht und der Ablaufschacht voneinander beabstandet befestigt sind. Das Pflanzenbeet erstreckt sich zwischen diesen Schächten und setzt sich darüber hinaus in einer Pflanzenbeetgrube fort. Die Pflanzenbeetgrube wird durch eine Wassersperrmaterialschicht gebildet, welche Bestandteil des Kläranlagengehäuses ist und die Kläranlage vom umgebenden Erdreich abgegrenzt. Zweckmäßiger Weise ist die Wassersperrmaterialschicht durch eine stabile Folie oder ähnliche wasserundurchlässige Schicht gebildet, die beim Einbau der Kläranlage in die Erdaushebung eingebracht wird. Die Folie kann mit den Rändern der Bodenplatte verbunden sein oder die Bodenplatte wird auf eine durchgehende Folie aufgesetzt. Letztlich ist bei dieser Ausführungsform die starre Wand des Pflanzenbeetschachtes der o.g. Ausführung durch eine flexible Wand ersetzt worden. Daraus ergibt sich ein weiterer Vorteil, nämlich die Möglichkeit des Einbaus der Kläranlage in unterschiedlichsten Geländen. Eine starre Vorgabe der Einbauabmessungen entfällt. Somit lassen sich auch gefälligere Formgebungen des Pflanzenbeetes erreichen, wodurch sich die Kläranlage noch besser in die jeweilige Umgebung integrieren lässt.

Das Kläranlagengehäuse kann vorzugsweise aus Kunststoff oder Beton hergestellt sein. Nach der werkseitigen Ausrüstung des Kläranlagengehäuses mit allen für den Betrieb der Pflanzenkläranlage erforderlichen Komponenten, ist auf einfache und kostengünstige Weise ein Transport der Pflanzenkläranlage zum vorgesehenen Einsatzort möglich, wobei das Transportgewicht relativ gering ist, da die Bodenschichten des Pflanzenbeetes erst vor Ort eingebracht werden müssen. Der Transport wird besonders bei der Ausführungsform erleichtert, die sich zur

Ausbildung des Pflanzenbeetes einer flexiblen Gehäusewandung, insbesondere in Form einer Folie bedient. Das für das Pflanzenbeet erforderliche große Volumen des Pflanzenbeetschachtes kann auf diese Weise beim Transport drastisch auf die Masse der Bodenplatte reduziert werden, auf welcher der Zulaufschacht und der Ablaufschacht befestigt sind. Ein weiterer wesentlicher Vorteil der erfindungsgemäßen Pflanzenkläranlage besteht darin, dass die beim Hersteller fertig konfektionierte Anlage ohne weiteres einem Testlauf unterzogen werden kann, so dass die Funktionssicherheit bei Auslieferung des Produktes sichergestellt ist. Durch den festen Einbau aller technischen Komponenten ist außerdem eine gleichbleibende Qualität des Abwasserklärprozesses gewährleistet, so dass es möglich wird, eine derartige Anlage einer technischen Bewertung und/oder amtlichen Zertifizierung zu unterziehen. Die Zulassung solcher Pflanzenkläranlagen vereinfacht sich dadurch deutlich, da eine behördliche Einzelabnahme nicht mehr erforderlich ist.

Bei der Pflanzenkläranlage sind weitere Komponenten in das Kläranlagengehäuse integriert, nämlich ein Belüfterschacht, der in Strömungsrichtung zwischen dem Zulaufschacht und dem Pflanzenbeet angeordnet ist; ein Belüfter, der im Belüfterschacht positioniert ist und Druckluft fein verteilt an das im Belüfterschacht enthaltene Abwasser abgibt; ein Steuerschacht, in welchem zumindest einige elektrische Steuer- und Versorgungsbaugruppen der Pflanzenkläranlage untergebracht sind und ein Kompressor, der im Steuerschacht positioniert ist und den Belüfter mit Druckluft versorgt.

Dies ermöglicht eine noch bessere Behandlung des Abwassers, da im Belüfterschacht eine Sauerstoffanreicherung erfolgt. Die Belüftung wird vorzugsweise in zyklischen Abständen ausgeführt, so dass die an sich bekannten Klärprozesse optimal ablaufen können. Die Anordnung eines separaten Steuerschachtes ermöglicht den Einbau elektrischer Steuer- und Versorgungskomponenten in einem getrennten Gehäusebereich. Damit werden Wartungsarbeiten erleichtert. In Weiterbildung dieser Ausführungsform können Fernbedieneinheiten vorgesehen sein, die an einem entfernten ort die wichtigsten Parameter der Pflanzenkläranlage anzeigen und dem Benutzer einen Eingriff in die ablaufenden Prozesse gestatten.

Bei einer bevorzugten Ausführungsform ist in dem Belüfterschacht außerdem ein Festbett angeordnet, in welchem eine Abwasserbehandlung mit Hilfe von Mikroorganismen erfolgt, mit dem Ziel des Abbaus des sogenannten BSB₅-Wertes.

Bei einer nochmals veränderten Ausführungsform ist in das Kläranlagengehäuse außerdem ein Klarwassersammelbehälter integriert, in welchen die Ablaufpumpe das Klarwasser einspeist. Das dort gesammelte Klarwasser steht als Brauchwasser zu Verfügung und kann beispielsweise für eine Gartenbewässerung benutzt werden.

In Abhängigkeit vom Standort der Pflanzenkläranlage und von den Nutzungsbedingungen kann es zweckmäßig sein, einen Füllstandssensor oder eine Feuchtesensor zu integrieren, der den Wasserpegel bzw. die Feuchtigkeit im Pflanzenbeetschacht überwacht. Zu einem ordnungsgemäßen Betrieb der Pflanzenkläranlage ist es erforderlich, dass das Pflanzenbeet nicht über einen längeren Zeitraum austrocknet, da dies den Bestand der eingepflanzten Sumpfpflanzen gefährden würde. Bei zu geringer Feuchtigkeit im Pflanzenbeetschacht würde der Sensor eine Wassereinspeisung erzwingen, so dass das Pflanzenbeet nicht austrocknet. Für die Wassereinspeisung kann ebenfalls das im Klarwassersammelbehälter gespeicherte Klarwasser genutzt werden.

Gemäß einer nochmals veränderten Ausführungsform sind zwei oder drei Vorklärschächte in das Kläranlagengehäuse integriert. Dies Vorklärschächte werden in herkömmlicher Weise zur Vorklärung des Abwassers genutzt. Dadurch erübrigt sich der separate Einbau von Vorklärbehältern.

Eine besonders vorteilhafte Ausführungsform zeichnet sich dadurch aus, dass im Pflanzenbeetschacht eine Befüllungsskala angeordnet ist, an welcher die Füllhöhen für die einzubringenden Bodenschichten markiert sind. Im Fall der Verwendung der flexiblen Wand (Folie) für den Pflanzenbeetschacht wird die Befüllungsskala zweckmäßiger Weise auf der zum Pflanzenbeet gerichteten Außenwand des Zu- oder Ablaufschachts angeordnet. Auf diese Weise wird die letzte Fehlerquelle, die beim Einbau der Pflanzenkläranlage besteht, ausgeschlossen. Die Befüllungsskala zeigt dem Einbauenden an, welche Bodenschichten an welcher Stelle und in welcher Menge in den Pflanzenbeetschacht einzubringen sind, um eine ordnungsgemäße Funktion sicherzustellen. In bekannter Weise werden an der Oberfläche geeignete Sumpfpflanzen eingepflanzt, die eine Lockerung der Bodenschichten sicherstellen und damit wichtige Aufgaben im Klärprozess erfüllen.

Die erfindungsgemäße Pflanzenkläranlage eignet sich sowohl für den Aufbau eines vertikal durchströmten Pflanzenbeetes als auch zur Einbringung eines horizontal durchströmten Pflanzenbeetes.

Weitere Vorteile, Einzelheiten und Weiterbildungen ergeben sich aus der nachfolgenden Beschreibung bevorzugter Ausführungsformen der Erfindung, unter Bezugnahme auf die Zeichnungen. Es zeigen:
- Fig. 1: eine seitliche Schnittansicht einer ersten Ausführungsform der Pflanzenkläranlage mit einem integrierten Zulaufschacht und einem integrierten Ablaufschacht;
- Fig. 2: eine seitliche Schnittansicht einer zweiten Ausführungsform der Pflanzenkläranlage, die weiterhin einen integrierten Belüfterschacht enthält;
- Fig. 3: eine seitliche Schnittansicht einer dritten Ausführungsform der Pflanzenkläranlage, wobei im Belüfterschacht ein Festbett angeordnet ist;
- Fig. 4: eine vereinfachte Ansicht von oben der in Fig. 3 dargestellten Ausführungsform;
- Fig. 5: eine seitliche Schnittansicht einer vierten Ausführungsform der Pflanzenkläranlage, die weiterhin einen integrierten Klarwassersammelbehälter enthält;
- Fig. 6: eine vereinfachte Detailzeichnung des Pflanzenbeetschachtes mit einer Befüllungsskala;
- Fig. 7: eine vereinfachte Schnittansicht einer fünften Ausführungsform der Pflanzenkläranlage, die eine flexible Wand des Pflanzenbeetschachtes in Form einer Folie verwendet.

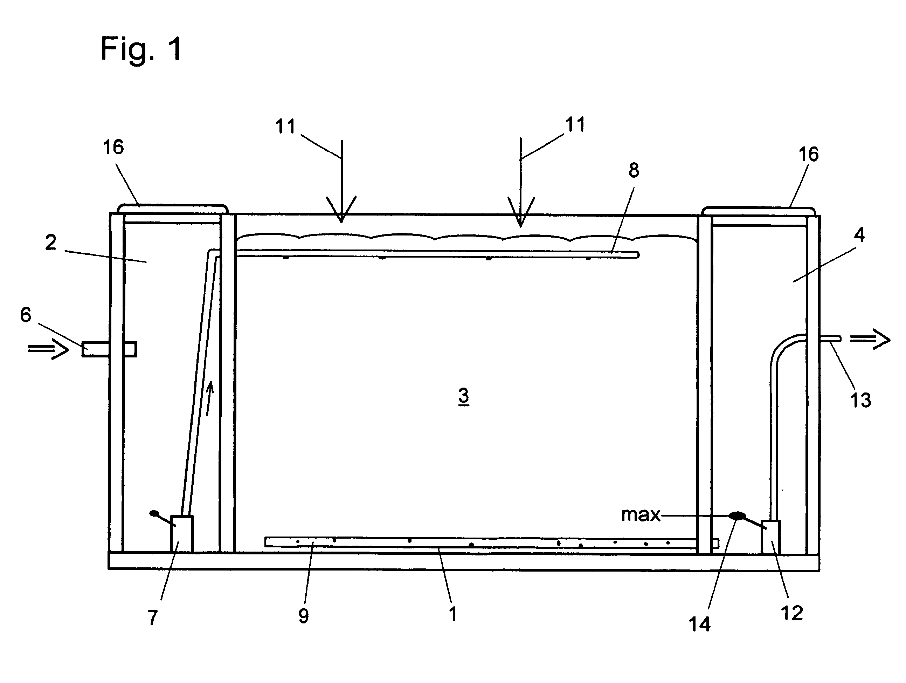

Fig. 1 zeigt eine seitliche Schnittansicht einer ersten, einfachen Ausführungsform der erfindungsgemäßen Pflanzenkläranlage. Die Pflanzenkläranlage besitzt in jedem Fall eine fertig konfektioniertes Kläranlagengehäuse 1. In das Kläranlagengehäuse 1 sind ein Zulaufschacht 2, ein Pflanzenbeetschacht 3 und ein Ablaufschacht 4 integriert. Über einen Zulauf 6 wird das zu klärende Abwasser in den Zulaufschacht 2 eingespeist. Je nach der Art des Abwassers (Verschmutzungsgrad) wird der Zulauf 6 aus einer Vorkläranlage gespeist, die aus mehreren Vorklärbehältern bestehen kann. In den meisten Fällen wird es zumindest erforderlich sein, die Feststoff- und Schlammanteile aus dem Abwasser zu entfernen, bevor die Einleitung in die Pflanzenkläranlage erfolgt. Im Zulaufschacht 2 ist weiterhin eine Zulaufpumpe 7 positioniert, welche das im Zulaufschacht 2 zwischengespeicherte Abwasser intervallweise in den Pflanzenbeetschacht 3 einpumpt.

Bei abgewandelten Ausführungsformen kann die Zulaufpumpe 7 auch an einer anderen Stelle im Kläranlagengehäuse 1 angeordnet sein. Die Zulaufpumpe 7 speist Verteilungsmittel 8, die zu einer gleichmäßigen Verteilung des Abwasser im Pflanzbeetschacht 3 positioniert sind. Bei der dargestellten Ausführungsform soll im Pflanzenbeetschacht 3 ein vertikal durchströmtes Pflanzenbeet ausgebildet werden. Somit befinden sich die Verteilungsmittel 8 im oberen Abschnitt des Pflanzenbeetschachtes 3 und sind dort so angeordnet, dass eine möglichst gleichmäßige Verteilung des Abwasser über die gesamte Fläche des Pflanzenbeetschachtes 3 erfolgt. Die Verteilungsmittel 8 können beispielsweise Rohrleitungen mit mehreren Auslassöffnungen sein, die in geeigneter Weise am Kläranlagengehäuse 1 befestigt sind.

Im Pflanzenbeetschacht 3 sind außerdem Sammelmittel 9 vorgesehen, die im Falle des vertikal durchströmten Pflanzenbeetes am Boden des Pflanzenbeetschachtes 3 positioniert sind. Als Sammelmittel 9 eignen sich herkömmliche Drainagerohre, mit denen eine Ableitung des Sickerwassers möglich ist. Während des Einbaus der Pflanzenkläranlage werden in den Pflanzenbeetschacht 3 mehrere Bodenschichten eingebracht (nicht gezeigt). Das benötigte Material für die Bodenschichten kann gesondert transportiert werden, so dass der Transport des fertig konfektionierten Gehäuses auch über größere Strecken ohne weiteres möglich ist. Nach Einfüllung der Bodenschichten erfolgt abschließend eine Bepflanzung des Pflanzenbeetes mit geeigneten Sumpfpflanzen 11. Welche Pflanzen sich zum Einsatz in Pflanzenkläranlagen eigenen und welche Materialien für den Aufbau der Bodenschichten zweckmäßig sind, ist dem Fachmann bekannt, so dass eine detaillierte Beschreibung an dieser Stelle nicht erforderlich ist.

Nachdem das Abwasser das Pflanzenbeet durchströmt hat und dort dem eigentlichen Klärprozess unterzogen wurde, wird es über die Sammelmittel 9 in den Ablaufschacht 4 eingeleitet. Das damit im Ablaufschacht 4 gespeicherte Klarwasser wird von einer Ablaufpumpe 12 zu einem Ablauf 13 der Pflanzenkläranlage gepumpt. Im gezeigten Beispiel ist die Ablaufpumpe 12 unmittelbar im Ablaufschacht 4 angeordnet, jedoch ist auch hier eine abweichende Positionierung möglich. Beispielsweise über einen Schwimmerschalter 14 kann die Ablaufpumpe 12 immer dann betätigt werden, wenn ein voreingestellter maximaler Wasserstand im Ablaufschacht 4 erreicht. Durch die Vorkonfektionierung kann dieser maximale Wasserstand bereits bei der Herstellung der Pflanzenkläranlage definiert werden, so dass Fehleinstellungen beim Einbau der Anlage ausgeschlossen sind. Das zyklische Abpumpen des Klarwasser ist notwendig, um im Pflanzenbeet eine ausreichende Sauerstoffzufuhr von der Oberfläche zu ermöglichen. Dies verbessert die zu erzielenden Klärergebnisse.

Der Zulaufschacht 2 und der Ablaufschacht 4 sind vorzugsweise durch geeignete Deckel 16 abgedeckt. Dadurch wird beispielsweise verhindert, dass Tiere in diese Schächte fallen können. Außerdem ist im Winterbetrieb sichergestellt, dass das in den Schächten zwischengespeicherte Wasser nicht einfriert, wodurch die Funktionsfähigkeit der gesamten Kläranlage gefährdet wäre.

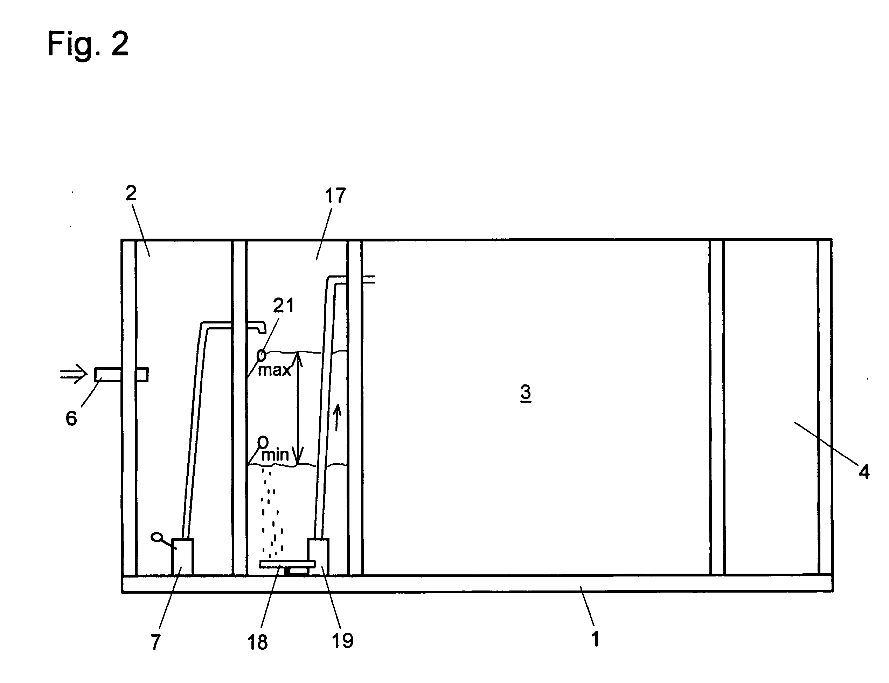

Fig. 2 zeigt in einer seitlichen Schnittansicht eine zweite Ausführungsform der Pflanzenkläranlage. Verschiedene bereits in Fig. 1 dargestellte Einzelheiten wurden zur Vereinfachung weggelassen. Der wesentliche Unterschied zu der oben dargestellten Ausführungsform besteht darin, dass im Kläranlagengehäuse 1 weiterhin ein Belüfterschacht 17 integriert ist. Der Belüfterschacht 17 empfängt das Abwasser von der Zulaufpumpe 7 und speichert dies für eine vorbestimmte Zeit. Im Belüfterschacht 17 ist ein Belüfter 18 angeordnet, der in das zwischengespeicherte Abwasser Sauerstoff einbringt, um gezielt Klärprozesse im Pflanzenbeet zu verbessern.

Im Belüfterschacht 17 ist weiterhin eine Zuführpumpe 19 vorgesehen, mit welcher das Abwasser stoßweise in den Pflanzenbeetschacht 3 überführt wird. Die Zuführpumpe 19 kann zeitgesteuert sein, oder in Abhängigkeit von Füllstandssensoren 21 betrieben werden, so dass der Wasserpegel im Belüfterschacht 17 immer zwischen einem Maximalpegel und einem Minimalpegel liegt.

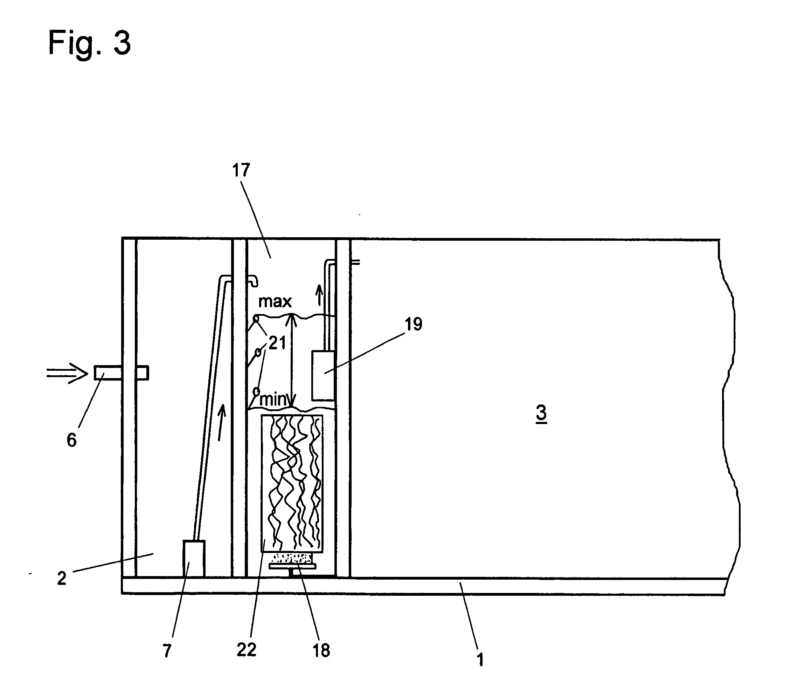

Fig. 3 zeigt in einer seitlichen Schnittansicht eine dritte Ausführungsform der Pflanzenkläranlage, wobei wiederum nur die veränderten Elemente detailliert dargestellt sind. Auch bei dieser Ausführungsform ist zwischen dem Zulaufschacht 2 und dem Pflanzenbeetschacht 3 der Belüfterschacht 17 angeordnet. Als Ergänzung ist im Belüfterschacht 17 ein sogenanntes Festbett 22 vorgesehen, welches beispielsweise aus einem Kunststoffblock mit Wabenstruktur besteht. Ziel des Festbettes ist es, eine möglichst große Oberfläche zur Ansiedlung von Mikroorganismen beriet zu stellen, wobei mit Hilfe dieser Mikroorganismen vor allem der BSB₅-Wert im Abwasser verbessert wird. Diese Vorbehandlung des Abwassers dient der Entlastung des Pflanzenbeetes, so dass die Gesamtgröße der Pflanzenkläranlage gegebenenfalls verringert werden kann. Im Belüfterschacht 17 sind wiederum der Belüfter 18, die Zuführpumpe 19 und mehrere Füllstandssensoren 21 angeordnet.

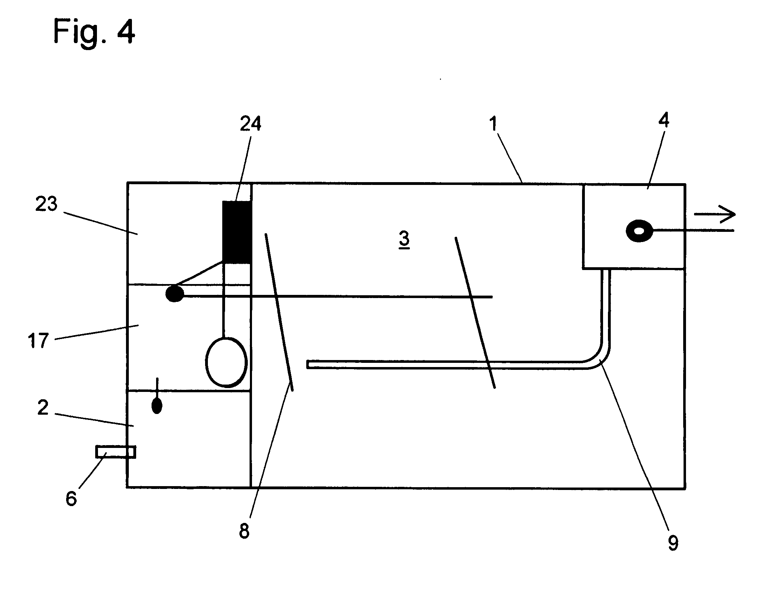

Fig. 4 zeigt eine vereinfachte Ansicht von oben auf die in Fig. 3 gezeigte Ausführungsform der Pflanzenkläranlage. Hierbei ist die mögliche Anordnung der einzelnen Schächte innerhalb des Kläranlagengehäuses 1 erkennbar. Der Pflanzenbeetschacht 3 nimmt die größte Fläche der Gesamtanlage ein. Erkennbar ist die zentrale Anordnung des Sammelmittels 9 und die verteilte Anordnung des Verteilungsmittels 8. Die weiteren Schächte der Pflanzenkläranlage können auf verschiedene Weise verteilt sein, wobei die in Fig. 4 dargestellt Anordnung sich als zweckmäßig erwiesen hat. Dabei ist der Zulaufschacht 2 in unmittelbarer Nähe zum Belüfterschacht 17 positioniert. Der Ablaufschacht 4 befindet sich auf der gegenüberliegenden Seite des Kläranlagengehäuses 1.

Darüber hinaus ist ein Steuerschacht 23 vorgesehen, in welchem beispielsweise ein Kompressor 24 angeordnet ist, der den Belüfter 18 mit Druckluft versorgt. Außerdem können im Steuerschacht 23 elektrische Steuerschaltungen und bei Bedarf auch eine oder mehrere der benötigten Pumpen angeordnet sein. Generell können verschiedene Pumpen eingesetzt werden. Es ist möglich, Tauchpumpen unmittelbar in den einzelnen Schächten zu positionieren. Bei abgewandelten Ausführungsformen können auch sogenannte Hebeeinrichtungen verwendet werden. Ebenso ist es denkbar, die Pumpen außerhalb der mit Abwasser gefüllten Schächte, z.B. im Steuerschacht anzuordnen, um gegebenenfalls Wartungsarbeiten leichter durchführen zu können. Natürlich würde dies einen erhöhten Aufwand bei der Leitungslegung bedeuten, der jedoch einfach zu beherrschen ist, da sämtliche Anschlüsse werksseitig konfiguriert werden, so dass beim Einbau der Anlage keine zusätzlichen Installationsarbeiten erforderlich sind.

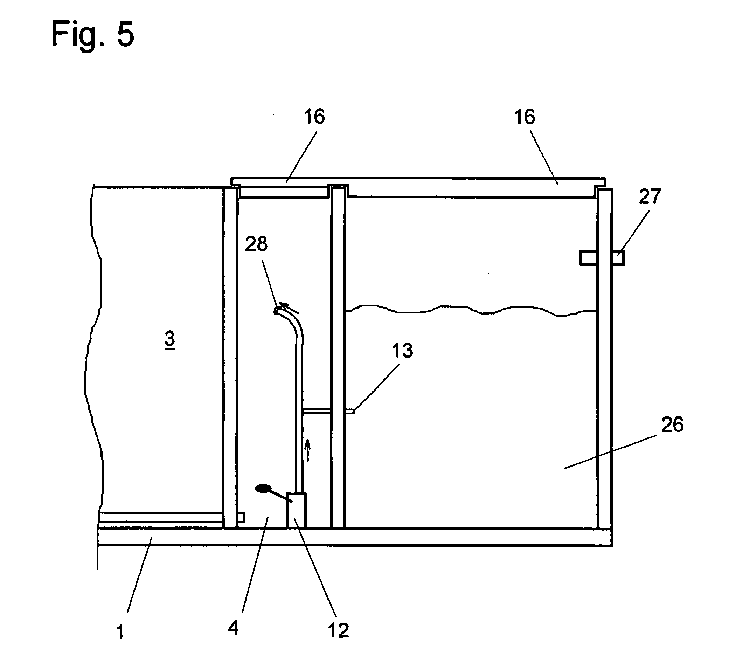

Fig. 5 zeigt eine seitliche Schnittansicht einer vierten Ausführungsform der Pflanzenkläranlage. Auch bei dieser Darstellung wurden nur diejenigen Elemente detailliert gezeichnet, die sich von den vorhergehenden Ausführungsformen unterscheiden. In das Kläranlagengehäuse 1 ist bei dieser Ausführungsform ein Klarwasserbehälter 26 integriert. Der Ablauf 13 des Ablaufschachtes 4 mündet in diesen Klarwasserbehälter 26. Das von der Pflanzenkläranlage gereinigte Wasser wird von der Ablaufpumpe 12 in den Klarwasserbehälter 26 gepumpt, wo es für weitere Verwendungen zur Verfügung gehalten wird. Der Klarwasserbehälter 26 besitzt einen Notüberlauf 27, der beispielsweise in einen öffentlichen Kanal oder in eine Sickergrube mündet. Das gesammelte Klarwasser kann bei Bedarf für die Gartenbewässerung benutzt werden.

Über einen Feuchtigkeitssensor (nicht gezeigt) ist es außerdem möglich die im Pflanzenbeetschacht 3 vorherrschende Feuchtigkeit zu überwachen. Es ist sicherzustellen, dass die Sumpfpflanzen 11 nicht austrocknen, da in diesem Fall die Funktionsfähigkeit der Pflanzenkläranlage nachhaltig gestört werden würde. In langen Trockenperioden kann es notwendig werden, zusätzlich zum Abwasser weiteres Wasser in das Pflanzenbeet einzubringen, um eine Austrocknung zu verhindern. Dazu kann das im Klarwassersammelbehälter 26 gespeicherte Klarwasser verwendet werden, so dass kein Trinkwasser benötigt wird. Eine zusätzliche Wassereinspeisung kann auch notwendig werden, wenn über einen längeren Zeitraum kein Abwasser anfällt, beispielsweise wenn die Nutzer der Pflanzenkläranlage über einen längeren Zeitraum nicht anwesend sind.

Sofern in bestimmten Regionen die Gefahr besteht, dass im Winter das gespeicherte Klarwasser im Klarwassersammelbehälter 26 einfriert, ist eine separater Winterablauf 28 vorzusehen, so dass das Klarwasser aus dem Ablaufschacht 4 am Klarwassersammelbehälter 26 vorbei geleitet wird.

Bei nicht dargestellten Ausführungsform können Vorklärschächte (z.B. Absetzgrube nach DIN 4261) in das Kläranlagengehäuse integriert sein, so dass sich der Einbau eigenständiger Vorklärbehälter erübrigt.

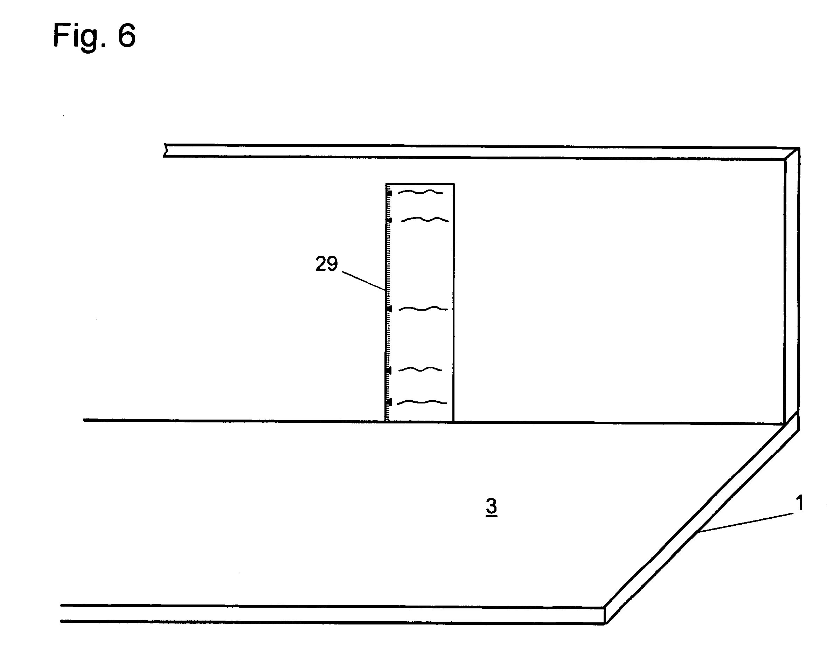

Fig. 6 zeigt in einer Detailzeichnung einen Abschnitt des Pflanzenbeetschachtes 3. Bei der hier gezeigten Ausführungsform ist im Pflanzenbeetschacht 3 eine Befüllungsskala 29 angeordnet, die vorzugsweise an der Innenseite des Gehäuses befestigt ist. Bei Kunststoffgehäusen kann die Skala 29 auch unmittelbar in die Innenwand eingeprägt sein. Zweckmäßigerweise sind auf der Befüllungsskala 29 Markierungen angebracht, die die bevorzugte Einfüllhöhe der einzelnen Bodenschichten anzeigen. Beim Einbau der Pflanzenkläranlage muss der Pflanzenbeetschacht 3 mit den entsprechenden Bodenmaterialien (Sand und Kies in verschiedenen Körnungen) befüllt werden. Um Fehler beim Einfüllen der einzelnen Bodenschichten zu vermeiden sind die Art des einzufüllenden Materials und die Menge als Füllstandshöhe an der Befüllungsskala 29 ablesbar. Dadurch erübrigt sich die Benutzung eines gesonderten Füllstandsmessers.

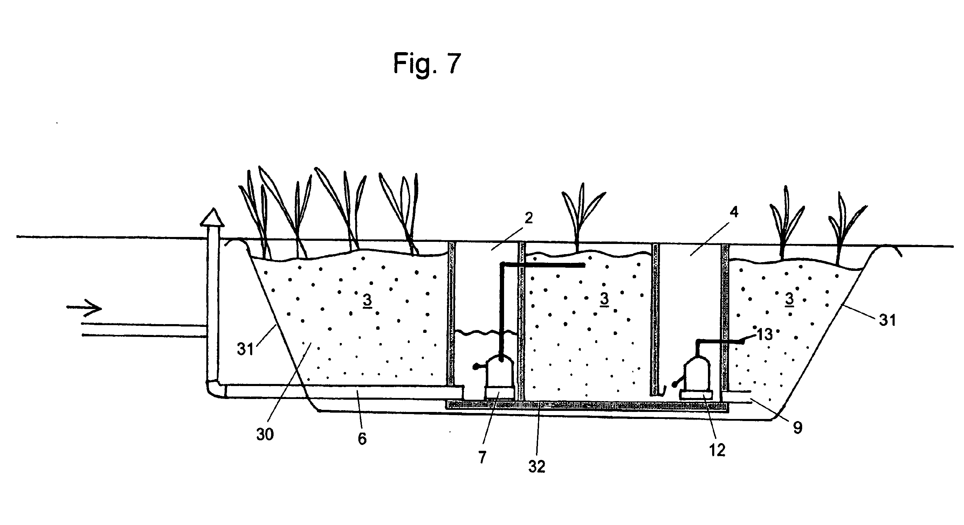

Fig. 7 zeigt eine nochmals abgewandelte Ausführungsform der Pflanzenkläranlage in einer Schnittansicht. Diese Variante reduziert den Platzbedarf beim Transport drastisch, da die Wände des Pflanzenbeetschachtes 3 flexibel gestaltet sind und somit während des Transports zusammengelegt werden können. Bei der in Fig. 7 dargestellten Ausführungsform erstreckt sich der Pflanzenbeetschacht 3 zwischen dem Zulaufschacht 2 und dem Ablaufschacht 4 sowie auch teilweise um diese herum in einer Pflanzenbeetgrube 30, die durch eine Folie 31 vom umgebenden Erdreich abgegrenzt wird. Um trotz der flexiblen Wände des Pflanzenbeetschachtes alle notwendigen Verbindungen zwischen den einzelnen Komponenten der Kläranlage herstellerseitig bereitstellen zu können, sind die anderen Schächte auf einer Bodenplatte 32 befestigt. Im dargestellten Beispiel sind nur Zu- und Ablaufschacht gezeigt, jedoch können auch bei dieser Ausführungsform der o.g. Belüfterschacht, der Steuerschacht der Klarwassersammelbehälter und/oder die Vorklärschächte vorgesehen werden, die dann ebenfalls auf der Bodenplatt angeordnet sind. Die Bodenplatte 32 mit den Schächten wird entweder auf eine durchgehende Folie 31 aufgestellt oder mit dieser fest verbunden, wodurch z.B. unter der Bodenplatte keine Folie verlegt zu werden braucht.

Die Bodenplatte 32 kann entweder zentrisch in der Pflanzenbeetgrube 31 stehen oder mit den Außenwänden der Schächte an zwei Seiten unmittelbar an das umgebende Erdreich angrenzen, so dass sich das zwischen Zu- und Ablaufschacht liegende Pflanzenbeet nur in Längsrichtung fortsetzt und diese Schächte nicht allseits umschließt. Die letztgenannte Variante besitzt den Vorteil, dass der Zulauf und der Ablauf der Kläranlage nicht durch das Pflanzenbeet 3 geführt werden müssen, sondern direkt im angrenzenden Erdreich verlegt werden und von dort aus unmittelbar in den jeweiligen Schacht einmünden. Außerdem hat man in diesem Fall direkten Zugang zu den jeweiligen Schächten, so dass beispielsweise bei Wartungsarbeiten das Pflanzenbeet selbst nicht betreten werden muss.

Bei der in Fig. 7 gezeigten Anschlussform der Kläranlage verläuft der Zulauf 6 teilweise durch das Pflanzenbeet. Um eine unerwünschte Druckbelastung des Zulaufrohrs durch Setzungserscheinungen zu vermeiden, wird das Zulaufrohr im wesentlichen direkt auf dem Boden des Pflanzenbeetes verlegt, welcher keine oder nur sehr geringe Setzungserscheinungen aufweist (anders als die locker im Pflanzenbeet eingebrachten Schichten). Damit die gewünschte Mindestfüllstandshöhe im Zulaufschacht trotzdem sichergestellt werden kann, wird das Zulaufrohr außerhalb der Pflanzenkläranlage steil nach oben geführt, auf das gewünschte Füllstandsniveau.

Für die Herstellung des Kläranlagengehäuses eignen sich verschiedene Materialien. Besonders zweckmäßig ist der Einsatz von verrottungsfesten und wurzelfesten Kunststoffen (in starrer oder flexibler Form), da dies ein besonders geringes Gewicht der Pflanzenkläranlage zur Folge hat. Wenn erhöhte Anforderungen an die Festigkeit des Gehäuses gestellt werden, kann dieses beispielsweise aus Beton hergestellt werden.

Die einzelnen Abmessungen der Pflanzenkläranlage werden nach den dem Fachmann bekannten Bemessungsregeln bestimmt, wobei das wesentliche Kriterium die zu erwartende Abwassermenge ist, die üblicherweise nach der Anzahl der einspeisenden Einwohner bestimmt wird. Es wird zweckmäßig sein, verschiedene Baugrößen, beispielsweise für zwei, vier, sechs oder acht Einwohner bereit zu halten. Für die Nutzer ist eine Dimensionierung beim Einbau nicht oder nur in sehr eingeschränktem Umfang erforderlich, da die Pflanzenkläranlage weitgehend fertig konfektioniert angeliefert wird. Beim Einbau der erfindungsgemäßen Pflanzenkläranlage mit starrem Pflanzenbeetschacht sind nur die Zu- und Ablaufleitungen anzuschließen, die einzelnen Bodenschichten einzufüllen und die Sumpfpflanzen in das Pflanzenbeet einzusetzen. Sofern ein aus Folie hergestellter Pflanzenbeetschacht verwendet wird, muss diese Folie in die ausgehobene Erdgrube eingelegt und an den Rändern in herkömmlicher Weise befestigt werden. Die Anschlussarbeiten sind aber auch in diesem Fall auf Zu- und Ablauf beschränkt, da die Zwischenverbindungen vollständig vorgefertigt sind.

## Patentansprüche

1. Stationäre Pflanzenkläranlage mit einem Zulauf (6), einem Ablauf (13) und einem Pflanzenbeet, welches von dem zu klärenden Abwasser durchströmt wird, **dadurch gekennzeichnet, dass** ein vorkonfektioniertes Kläranlagengehäuse (1) vorgesehen ist, in welchem bereits vor dem Einbau der Pflanzenkläranlage im Boden zumindest die nachfolgend genannten Komponenten integriert sind:
• ein Zulaufschacht (2), in den ein Zulauf (6) mündet;
• eine Zulaufpumpe (7), deren Saugseite in den Zulaufschacht (2) mündet;
• zumindest Teile eines Pflanzenbeetes (3) zur Aufnahme mehrerer Bodenschichten und Sumpfpflanzen (11), die beim Einbau der Pflanzenkläranlage eingebracht werden;
• ein Verteilungsmittel (8), welches auf der Schmutzwasserseite des Pflanzenbeetes (3) angeordnet und an die Druckseite der Zulaufpumpe (7) angeschlossen ist;
• ein Sammelmittel (9), welches auf der Klarwasserseite des Pflanzenbeetes (3) angeordnet ist;
• ein Ablaufschacht (4), in den das Sammelmittel (9) mündet;
• eine Ablaufpumpe (12), deren Saugseite in den Ablaufschacht (4) mündet und deren Druckseite an den Ablauf (13) angeschlossen ist;
• ein Belüfterschacht (17), der in Strömungsrichtung zwischen dem Zulaufschacht (2) und dem Pflanzenbeet (3) angeordnet ist;
• ein Belüfter (18), der im Belüfterschacht (17) positioniert ist und Druckluft fein verteilt an das im Belüfterschacht enthaltene Abwasser abgibt; und
• ein Steuerschacht (23), in welchem ein Kompressor (24) zur Versorgung des Belüfters (18) und elektrische Steuer- und Versorgungsbaugruppen der Pflanzenkläranlage untergebracht sind.

2. Pflanzenkläranlage nach Anspruch 1, **dadurch gekennzeichnet, dass** das Kläranlagengehäuse (1) fertig konfektioniert ist, wobei das Pflanzenbeet vollständig von einem Pflanzenbeetschacht (3) gebildet ist, welcher in das Kläranlagengehäuse integriert ist.

3. Pflanzenkläranlage nach Anspruch 1, **dadurch gekennzeichnet, dass** das vorkonfektionierte Kläranlagengehäuse (1) eine Bodenplatte umfasst, auf welcher zumindest der Zulaufschacht und der Ablaufschacht voneinander beabstandet befestigt sind, wobei sich das Pflanzenbeet zwischen diesen Schächten erstreckt und darüber hinaus in einer Pflanzenbeetgrube, die durch eine Wassersperrmaterialschicht, welche Bestandteil des Kläranlagengehäuses ist, vom umgebenden Erdreich abgegrenzt ist.

4. Pflanzenkläranlage nach Anspruch 3, **dadurch gekennzeichnet, dass** der Zulauf (6) im wesentlich am Boden durch die Pflanzenbeetgrube geführt ist und erst außerhalb der Pflanzenbeetgrube auf ein höheres Niveau angehoben ist.

5. Pflanzenkläranlage nach einem der Ansprüche 1 bis 4, **dadurch gekennzeichnet, dass** im Belüfterschacht (17) weiterhin ein Festbett (22) zur Verbesserung des BSB₅₋Wertes des Abwassers angeordnet ist.

6. Pflanzenkläranlage nach einem der Ansprüche 1 bis 5, **dadurch gekennzeichnet, dass** in das Kläranlagengehäuse (1) weiterhin ein Klarwassersammelbehälter (26), in welchen die Ablaufpumpe (12) das Klarwasser einspeist, und/oder mehrere Vorklärschächte, in denen eine Vorklärung des Abwassers erfolgt, integriert sind.

7. Pflanzenkläranlage nach einem der Ansprüche 1 bis 6, **dadurch gekennzeichnet, dass** ein Feuchtigkeitssensor integriert, der den Wasserpegel im Pflanzenbeetschacht (3) überwacht und bei Unterschreitung eines Minimalwertes eine Wassereinspeisung in den Pflanzenbeetschacht (3) auslöst.

8. Pflanzenkläranlage nach einem der Ansprüche 1 bis 7, **dadurch gekennzeichnet, dass** im Pflanzenbeet (3) eine Befüllungsskala (29) angeordnet ist, an welcher die Füllhöhen für die einzubringenden Bodenschichten markiert sind.

9. Pflanzenkläranlage nach einem der Ansprüche 1 bis 8, **dadurch gekennzeichnet, dass** sie für ein vertikal durchströmtes Pflanzenbeet konfektioniert ist, wobei die Sammelmittel (9) durch mindestens ein Drainagerohr am Boden des Pflanzenbeetes (3) und die Verteilungsmittel (8) durch eine Verteilerleitung mit einer Vielzahl von Öffnungen im oberen Abschnitt des Pflanzenbeetes (3) gebildet sind.

10. Pflanzenkläranlage nach einem der Ansprüche 1 bis 9, **dadurch gekennzeichnet, dass** alle vorhandenen Schächte außer dem Pflanzenbeetschacht an ihrer Oberseite durch wärmeisolierende Deckel (16) verschlossen sind.

## Claims

1. Stationary waste-water phyto-treatment plant comprising an inlet (6), an outlet (13) and a plant bed through which the waste water to be purified flows, **characterised in that** a pre-assembled waste-water treatment plant housing (1) is provided wherein at least the components specified hereinafter are integrated before the phyto-treatment plant is installed in the ground:
- an inlet shaft (2) into which an inlet (6) discharges;
- an inlet pump (7) whose suction side opens into the inlet shaft (2);
- at least parts of a plant bed (3) for receiving a plurality of soil layers and sump plants (11) which are incorporated when installing the phyto-treatment plant;
- a distributing means (8) which is arranged on the dirty water side of the plant bed (3) and is connected to the delivery side of the inlet pump (7);
- a collecting means (9) which is disposed on the clarified waste water side of the plant bed (3);
- an outlet shaft (4) into which the collecting means (9) discharges;
- an outlet pump (12) whose suction side opens into the outlet shaft (4) and whose delivery side is connected to the outlet (13);
- an aerator shaft (17) disposed between the inlet shaft (2) and the plant bed (3) in the direction of flow;
- an aerator (18) which is positioned in the aerator shaft (17) and delivers compressed air finely distributed to the waste water contained in the aerator shaft;
- a control shaft (23) which contains a compressor (24) for supplying the aerator (18) and electrical control and supply assemblies of the phyto-treatment plant.

2. The phyto-treatment plant according to claim 1, **characterised in that** the waste-water treatment plant housing (1) is ready assembled, wherein the plant bed is completely formed by a plant bed shaft (3) which is integrated in the waste-water treatment plant housing.

3. The phyto-treatment plant according to claim 1, **characterised in that** the pre-assembled waste-water treatment plant housing (1) comprises a base plate on which at least the inlet shaft and the outlet shaft are fixed at a distance from one another, wherein the plant bed extends between these shafts and additionally in a plant bed pit which is delimited from the surrounding soil by a water barrier material layer which is part of the waste-water treatment plant housing.

4. The phyto-treatment plant according to claim 3, **characterised in that** the inlet (6) is guided substantially at the bottom through the plant bed pit and is only raised to a higher level outside the plant bed pit.

5. The phyto-treatment plant according to any one of claims 1 to 4, **characterised in that** a fixed bed (22) for improving the BSB₅ value of the waste water is further disposed in the aerator shaft (17).

6. The phyto-treatment plant according to any one of claims 1 to 5, **characterised in that** also integrated in the waste-water treatment plant housing (1) is a clarified waste water collecting container (26) into which the outlet pump (12) feeds the clarified waste water and/or a plurality of pre-clarifying shafts in which the waste water is pre-clarified.

7. The phyto-treatment plant according to any one of claims 1 to 6, **characterised in that** a moisture sensor is integrated which monitors the water level in the plant bed shaft (3) and when this falls below a minimum value, triggers a supply of water into the plant bed shaft (3).

8. The phyto-treatment plant according to any one of claims 1 to 7, **characterised in that** a filling scale (29) is located in the plant bed (3) on which are marked the filling levels for the soil layers to be introduced.

9. The phyto-treatment plant according to any one of claims 1 to 8, **characterised in that** this is assembled for a vertical-flow plant bed wherein the collecting means (9) is formed by at least one drainage pipe at the bottom of the plant bed (3) and the distributing means (8) is formed by a distributor pipe with a plurality of openings in the upper section of the plant bed (3).

10. The phyto-treatment plant according to any one of claims 1 to 9, **characterised in that** all the shafts provided apart from the plant bed shaft are closed by a heat-insulating cover (16) at their top.

## Revendications

1. Installation d'épuration végétale stationnaire, avec une alimentation (6), une évacuation (13) et une plate-bande de végétaux, qui est traversée par les eaux usées devant être épurées, **caractérisée en ce qu'**on a prévu un coffre préfabriqué d'installation d'épuration (1), dans lequel les composants ci-dessous cités sont d'ores et déjà intégrés avant l'implantation de l'installation d'épuration végétale :
- un puits d'alimentation (2), dans lequel débouche une alimentation (6) ;
- une pompe d'alimentation (7), dont le côté aspiration débouche dans le puits d'alimentation (2) ;
- au moins des parties d'une plate-bande de végétaux (3) pour recueillir plusieurs couches de fond et plantes des marais (11) que l'on introduit lors de l'implantation de l'installation d'épuration végétale ;
- un moyen de distribution (8) qui est disposé sur le côté eau boueuse de la plate-bande de végétaux (3 et qui est raccordé sur le côté pression de la pompe d'alimentation (7) ;
- un moyen collecteur (9), qui est disposé du côté eau claire de la plate-bande de végétaux (3) ;
- un puits d'évacuation (4) dans lequel débouche le moyen collecteur (9) ;
- une pompe d'évacuation (12), dont le côté aspiration débouche dans le puits d'évacuation (4) et dont le côté pression est raccordé sur l'évacuation (13) ;
- un puits d'aération (17) qui dans le sens d'écoulement est disposé entre le puits d'alimentation (2) et la plate-bande de végétaux (3) ;
- un aérateur (18) qui est positionné dans le puits d'aération (17) et qui restitue de l'air comprimé finement distribué dans les eaux usées contenues dans le puits d'aération ; et
- un puits de commande (23) dans lequel sont logés un compresseur (24) pour l'alimentation de l'aérateur (18) et des modules électriques de commande et d'alimentation de l'installation d'épuration végétale.

2. Installation d'épuration végétale selon la revendication 1, **caractérisée en ce que** la caisse d'installation d'épuration (1) est entièrement préfabriquée, la plate-bande de végétaux étant formée par un puits de plate-bande de végétaux (3) qui est intégré dans la caisse d'installation d'épuration.

3. Installation d'épuration végétale selon la revendication 1, **caractérisée en ce que** la caisse d'installation d'épuration préfabriquée (1) comporte une plaque de fond, sur laquelle au moins le puits d'alimentation et le puits d'évacuation sont fixés à distance réciproque, la plate-bande de végétaux s'étendant entre ces puits et se trouvant par ailleurs dans une fosse à plate-bande de végétaux, qui est délimitée du terrain environnant par une couche de matériau de retenue d'eau, qui est une partie intégrante de la caisse d'installation d'épuration.

4. Installation d'épuration végétale selon la revendication 3, **caractérisée en ce que** l'alimentation (6) est sensiblement conduite sur le fond, à travers la fosse à plate-bande de végétaux et **en ce qu'**elle n'est relevée à un niveau plus haut qu'à l'extérieur de la fosse à plate-bande de végétaux.

5. Installation d'épuration végétale selon l'une quelconque des revendications 1 à 4, **caractérisée en ce que** par ailleurs, un lit fixe (22) est disposé dans le puits d'aération (17) pour améliorer la valeur BSB₅ des eaux usées.

6. Installation d'épuration végétale selon l'une quelconque des revendications 1 à 5, **caractérisée en ce que** par ailleurs, un réservoir collecteur (26), dans lequel la pompe d'évacuation (12) alimente l'eau claire et/ou plusieurs puits de prédécantation, dans lesquels a lieu une prédécantation des eaux usées sont intégrés dans la caisse d'installation d'épuration.

7. Installation d'épuration végétale selon l'une quelconque des revendications 1 à 6, **caractérisée en ce qu'**un capteur d'humidité qui surveille le niveau d'eau dans le puits de plate-bande de végétaux (3) et qui en cas de non atteinte d'une valeur minimale déclenche une alimentation d'eau dans le puits de plate-bande (3) est intégré.

8. Installation d'épuration végétale selon l'une quelconque des revendications 1 à 7, **caractérisée en ce qu'**une échelle de remplissage (29) sur laquelle sont marquées les hauteurs de remplissage pour les couches de fond à introduire est disposée dans la plate-bande de végétaux (3).

9. Installation d'épuration végétale selon l'une quelconque des revendications 1 à 8, **caractérisée en ce qu'**elle est fabriquée pour une plate-bande de végétaux traversée à la verticale, les moyens collecteurs (9) étant formés par au moins un tube de drainage sur le fond de la plate-bande de végétaux (3) et les moyens distributeurs (8) étant formés par un conduit distributeur avec une pluralité d'orifices dans la partie supérieure de la plate-bande de végétaux (3).

10. Installation d'épuration végétale selon l'une quelconque des revendications 1 à 9, **caractérisée en ce que** tous les puits existants, à l'exception du puits pour plate-bande de végétaux sont fermés sur leur côté supérieur par un couvercle (16) assurant une isolation thermique.
